Europäisches Patentamt

European Patent Office

Office européen des brevets

(11) Veröffentlichungsnummer: **0 263 922**
**A2**

(12) **EUROPÄISCHE PATENTANMELDUNG**

(21) Anmeldenummer: 87109905.7

(22) Anmeldetag: 09.07.87

(51) Int. Cl.4: **F16K 5/02**

(30) Priorität: **15.10.86 DE 3635058**

(43) Veröffentlichungstag der Anmeldung:
**20.04.88 Patentblatt 88/16**

(84) Benannte Vertragsstaaten:
**AT BE CH DE ES FR GB GR IT LI LU NL SE**

(71) Anmelder: **DEUTSCHE AUDCO GMBH**
**Postfach**
**D-2081 Prisdorf bei Hamburg(DE)**

(72) Erfinder: **Schröder, Wilhelm Heinrich**
**Heider Strasse 16**
**D-2000 Hamburg 20(DE)**

(74) Vertreter: **Dipl.-Ing. H. Hauck Dipl.-Phys. W.**
**Schmitz Dipl.-Ing. E. Graalfs Dipl.-Ing. W.**
**Wehnert Dr.-Ing. W. Döring**
**Neuer Wall 41**
**D-2000 Hamburg 36(DE)**

(54) **Dichtungsanordnung für den Betätigungszapfen eines Absperrhahns.**

(57) Dichtungsanordnung für den Betätigungszapfen eines Absperrhahns, mit einer ringförmigen, den Absperrzapfen umgebenden Membran aus PTFE, die auf einer oberen Schulterfläche des Hahnkükens aufliegt und am inneren Rand ein im Querschnitt hakenförmiges, zwei Schenkel aufweisendes Profil aufweist zur Bildung einer gegen den Betätigungszapfen anliegenden Dichtlippe durch den inneren Schenkel, wobei der Scheitel des Profils auf der dem Hahnküken abgewandten Seite liegt, einem Druckring, der gegen die Membran anliegt und am inneren Rand der äußeren Kontur des hakenförmigen Profils folgt, und einer Andrückvorrichtung für den Druckring, die von außerhalb des Hahngehäuses betätigbar ist, wobei die Membran aus virginalem PTFE aus dem Vollen gedreht ist und das hakenförmige Profil so geformt und angeordnet ist, daß sich die Dichtlippe beim Aufbringen der Membran auf den Betätigungszapfen elastisch in den freien Ringraum zwischen den Schenkeln verformen kann unter satter Anlage der geraden Innnenseite der Dichtlippe am Betätigungszapfen.

FIG.1

## Dichtungsanordnung für den Betätigungszapfen eines Absperrhahns

Die Erfindung bezieht sich auf eine Dichtungsanordnung für den Betätigungszapfen eines Absperrhahns, mit einer ringförmigen, den Betätigungszapfen umgebenden Membran aus PTFE, die auf einer oberen Schulterfläche des Hahnkükens aufliegt und am inneren Rand ein im Querschnitt hakenförmiges, zwei Schenkel aufweisendes Profil aufweist zur Bildung einer gegen den Betätigungszapfen anliegenden Dichtlippe durch den inneren Schenkel, wobei der Scheitel des Profils auf der dem Hahnküken abgewandten Seite liegt, einem Druckring, der gegen die Membran anliegt und am inneren Rand der äußeren Kontur des hakenförmigen Profils folgt, und einer Andrückvorrichtung für den Druckring, die von außerhalb des Hahngehäuses betätigbar ist.

In der vorliegenden Beschreibung wird die Bezeichnung PTFE für den Werkstoff Polytetrafluorethylen verwendet.

Bei einer bekannten Dichtungsanordnung ist ein im Querschnitt dreieckförmiger Dichtungsring aus PTFE um den Zapfen herumgelegt, und die Membran aus PTFE ist am inneren Rand an dem Dichtungsring hochgebogen (DE-PS 21 45 196). Der Druckring liegt gegen die hochgebogene Lippe sowie gegen den flachen Bereich der Membran an und wird mit Hilfe von drei in gleichmäßigem Winkelabstand angeordneten Stellschrauben angedrückt. In einer weiteren Ausbildung der bekannten Vorrichtung ist außerdem bekanntgeworden, den inneren Rand der Membran mit einem hakenartigen Profil zu versehen, wobei der dreieckförmige Ring aus PTFE zwischen den beiden Schenkeln angeordnet ist.

Bei der zuletzt beschriebenen bekannten Ausführungsform ist die PTFE-Membran vorgeformt. Dies führt dazu, daß die natürlichen Eigenschaften des PTFE verändert werden, das Material daher nicht mehr so elastisch ist wie im Ursprungszustand. Der im Querschnitt dreieckförmige Ring (Delta-Ring) gibt daher der Membran im Dichtungsbereich die Formstabilität, wobei jedoch der Delta-Ring während der Montage ebenfalls verformt wird. Die Außenform des äußeren Schenkels des Hakenprofils wird durch den Druckring vorgegeben. Im Belastungsfall wirkt jedoch die hierfür vorgesehene Schräge des Druckrings abhebend. Sinkt das Hahnküken ab, was während des Betriebs stets der Fall ist, wird die enge Anlage der einzelnen Teile der Dichtungsanordnung aufgehoben und damit auch der Kraftschluß, wodurch die Dichtigkeit beeinträchtigt wird. Ein Absacken des Hahnkükens muß daher ständig durch ein Nachstellen des Druckrings kompensiert werden. Um an die hierfür zu betätigenden Stellschrauben zu gelangen, muß der gesamte Antrieb abgebaut werden, was entsprechend aufwendig ist.

Die Membran wird durch den Druckring quetschend festgelegt. Die hierbei auftretende Ausdehnung des Materials führt dazu, daß sich der äußere Schenkel des Hakenprofils am Deltaring hochschiebt und somit zur Dichtigkeit nicht beiträgt.

Der Erfindung liegt die Aufgabe zugrunde, eine Dichtungsanordnung für den Betätigungszapfen eines Absperrhahns zu schaffen, bei der eine einwandfreie Dichtwirkung zwischen Dichtlippe und Schaft erhalten wird, bei der ferner der Druckring beim Absacken des Hahnkükens weniger häufig nachgestellt werden muß und bei der das Quetschen der Membran durch den Druckring sich dichtungsverstärkend auswirkt.

Diese Aufgabe wird erfindungsgemäß dadurch gelöst, daß die Membran aus virginalem PTFE aus dem Vollen gedreht ist und das hakenförmige Profil so geformt und angeordnet ist, daß sich die Dichtlippe beim Aufbringen der Membran auf den Betätigungszapfen elastisch in den freien Ringraum zwischen den Schenkeln verformen kann unter satter Anlage der geraden Innenseite der Dichtlippe am Befestigungszapfen.

Bei der erfindungsgemäßen Dichtungsanordnung ist die Dichtungsmembran bzw. das hakenförmige Dichtungsprofil ein Drehteil. Es ist daher möglich, dem hakenförmigen Profil die optimale Form zu geben. Die Formstabilität ergibt sich aus dem natürlichen Verhalten des Materials von selbst, so daß zusätzliche formgebende Teile, wie der Deltaring bei der oben beschriebenen Dichtungsanordnung, nicht erforderlich sind. Das hakenförmige Dichtungsprofil verformt sich bei der Montage nahezu ausschließlich elastisch, so daß ein wirksamer Dichtungseingriff mit dem Betätigungszapfen erhalten wird.

Durch das Drehen aus dem Vollen kann der Dichtlippe auch ein Labyrinth zugeordnet werden, was die Dichtwirkung noch verbessert.

In einer Ausgestaltung der Erfindung ist vorgesehen, daß der äußere Schenkel des hakenförmigen Profils mit der Ebene der Membran einen spitzen Winkel bildet und eine ringförmige Metallmembran schnappend auf das hakenförmige Profil aufsteckbar ist. Es ist an sich bekannt, den Anpreßdruck vom Druckring über eine Metallmembran auf die PTFE-Membran aufzubringen, um nicht zu hohe örtliche Flächenpressung zu erhalten, die zu einem unerwünschten Kaltfließen des PTFE führt. Nach einer weiteren Ausgestaltung ist vorteilhaft, wenn das Querschnittsprofil des Druckrings derart ist, daß er ebenfalls schnappend auf das hakenförmige Profil aufsteckbar ist. Auf diese Weise bilden PTFE-Membran, Metallmembran und Druckring eine Einheit, die komplett auf dem Betätigungszapfen montierbar ist. Auch die Ersatzteilhaltung wird auf diese Weise vereinfacht und verbilligt. Besonders vorteilhaft ist jedoch, daß beim Absacken des Hahnkükens die formschlüssig zusammengesteckten Teile in ihrer Lage zueinander verbleiben und daher nach wie vor für eine ausreichende Dichtwirkung sorgen. Ein Nachstellen ist daher weniger häufig nötig.

Es sei noch erwähnt, daß ein Quetschen der Membran die Dichtwirkung nicht beeinträchtigt. Im Grenzfall legt sich die Membran dabei gegen die Dichtlippe an und drückt die Dichtlippe verstärkt gegen den Betätigungszapfen.

Bei einer anderen Ausgestaltung der Erfindung ist unterhalb der Dichtlippe an den Betätigungszapfen angrenzend eine Ringnut in der Schulterfläche des Hahnkükens geformt. Sie bildet eine Abriebfangnut, die verhindert, daß abgeriebenes Material zwischen die Dichtflächen gelangt. Eine derartige Abriebfangnut kann nicht vorgesehen werden, wenn ein Deltaring zur Verstärkung der Dichtlippe verwendet wird.

Eine weitere Ausgestaltung der Erfindung sieht vor, daß der Druckring auf der der Membran abgewandten Seite eine konische Ringfläche aufweist, die in Richtung Zapfen geneigt ist, ein Zwischenring mit seiner Kugelabschnittsfläche gegen die konische Ringfläche anliegt und den Zapfen mit radialem Abstand umgibt und eine den Betätigungszapfen umgebende Andrückhülse in ein Gehäuseteil einschraubbar ist und gegen die der Kugelabschnittsfläche abgewandten Seite des Zwischenrings anliegt. Die Andrückhülse kann z.B. in einen den Betätigungszapfen umgebenden Flansch eingeschraubt werden. Sie dient dazu, über den Zwischenring einen Druck auf den Druckring auszuüben, der seinerseits gegen das Hakenprofil bzw. die PTFE-Membran andrückt. Die Andrückhülse steht vorzugsweise etwas aus dem Gehäuse vor und ist in diesem Bereich mit Angriffsflächen für ein Werkzeug versehen. Auf diese Weise ist es möglich, die Andrückhülse auch ohne den Ausbau eines Antriebs zu verstellen. Der ballige Zwischenring sorgt dafür, daß unabhängig von der Lage der einzelnen Teile zueinander stets ein über den Umfang gleichmäßiger Druck auf den Druckring aufgebracht wird. Dies ist mit Stellschrauben kaum zu erreichen.

Die Erfindung wird nachfolgend anhand von Zeichnungen näher erläutert.

Fig. 1 zeigt einen Schnitt durch einen Hahn entlang der Linie 1-1 nach Fig. 3 mit einer Dichtungsanordnung nach der Erfindung.

Fig. 2 zeigt einen Schnitt durch die Darstellung nach Fig. 3 entlang der Linie 2-2.

Fig. 3 zeigt die Draufsicht auf den Hahn nach Fig. 1.

Fig. 4 zeigt einen Schnitt durch eine Membran der Dichtungsanordnung des Hahns nach Fig. 1.

Fig. 5 zeigt eine Draufsicht auf die Membran nach Fig. 4.

Fig. 6 zeigt die Einzelheit X in der Darstellung nach Fig. 4 in vergrößertem Maßstab.

Fig. 7 zeigt im Schnitt einen Druckring der Dichtungsanordnung nach Fig. 1.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung ist.

In einem Hahngehäuse 10 ist ein Kegelküken 11 in bekannter Weise aufgenommen und gelagert. Das Hahngehäuse 10 weist diametral gegenüberliegende Anschlußstutzen 12, 13 auf, die an den Enden mit Flanschen 14, 15 versehen sind. Das Hahngehäuse 10 ist nach unten geschlossen und weist nach oben eine Öffnung 16 auf, über die das Küken 11 eingeführt wird und über die nach oben ein Betätigungszapfen 17 herausgeführt ist Der Betätigungszapfen hat kreisrunden Querschnitt, ist jedoch am oberen Bereich mit zwei parallelen Abflachungen 18 versehen zwecks Eingriff mit einem Handhebel, einem Antrieb oder dergleichen. Die bisher beschriebenen Merkmale sind an sich bekannt und sollen im weiteren nicht mehr erläutert werden.

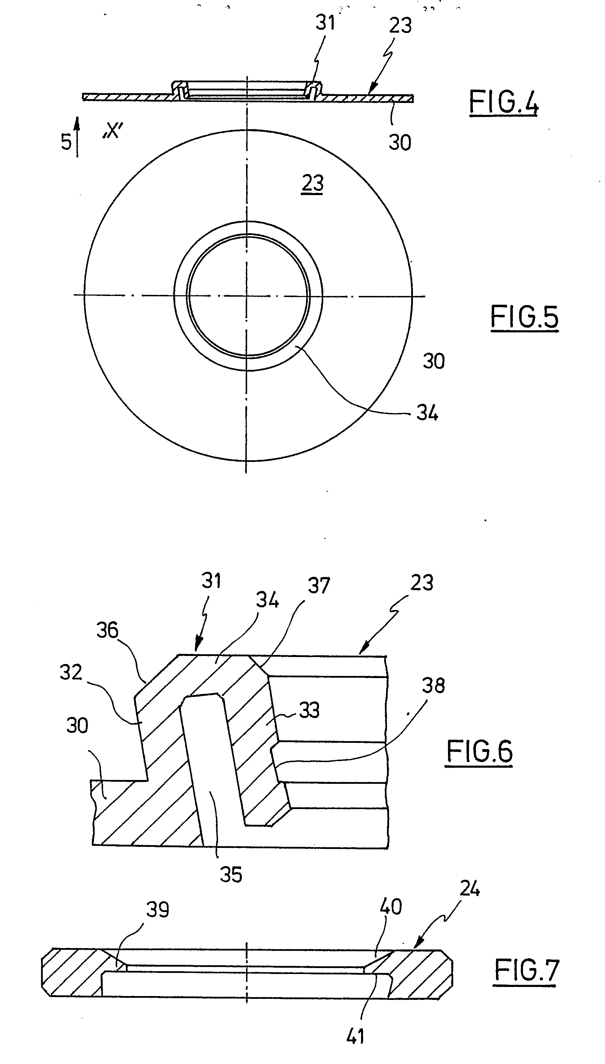

Das Hahnküken 11 weist an der Oberseite eine äußere ebene Ringfläche 19 auf, an die sich eine Ringfläche 20 radial weiter innen anschließt. Sie ist auf einer ringförmigen Erhebung gebildet. Zwischen der Erhebung und dem Betätigungszapfen 17 ist eine Ringnut 21 geformt. Auf der Erhebung ist eine Membran 22 aus PTFE angeordnet, deren Einzelheiten anhand von den Figuren 4 bis 6 noch näher erläutert werden. Auf der Membran 12 ist eine dünne ringförmige Metallmembran 23 gelegt. Auf der Metallmembran 23 ruht ein Druckring 24, der in Verbindung mit Fig. 7 näher beschrieben werden soll Oberhalb des Druckrings befindet sich ein Zwischenring 25, der an der Unterseite eine kugelige Fläche aufweist, deren Mittelpunkt auf der Achse des Ringes 25 liegt.

Der Betätigungszapfen 17 wird von einem im Umriß annähernd quadratischen Flansch 26 umgeben, der mittels vier Schrauben 27 an den Ecken mit der Oberseite des Gehäuses 10 verbindbar ist. Der Flansch 26 weist entsprechende Ausnehmungen auf, in denen der Druckring 24 und der Zwischenring 25 aufgenommen sind. Die Bohrung des Flansches 26 ist mit Innengewinde versehen, in das eine Andrückhülse 27 eingeschraubt ist. Die Andrückhülse umgibt den Betätigungszapfen 17 mit Abstand und weist am oberen Ende einen Sechskant 28 auf zwecks Verdrehung mit Hilfe eines geeigneten Werkzeugs. Der Flansch 26 besitzt vier Bohrungen 29 zur Anbringung beispielsweise einer Antriebsvorrichtung.

Der PTFE-Flansch 23 der Dichtungsanordnung zur Abdichtung des Betätigungszapfens 17 ist in den Figuren 4 und 5 näher dargestellt. Er setzt sich aus einem Ringscheibenabschnitt 30 und einem im Querschnitt hakenförmigen Profilabschnitt 31 zusammen. Der hakenförmige Profilabschnitt 31 ist vergrößert in Fig. 6 dargestellt. Er besitzt einen äußeren Schenkel 32, der sich im spitzen Winkel von dem Scheibenabschnitt 30 forterstreckt. Die Außenseite des Schenkels 32 bildet mithin einen Hinterschnitt. Ein innerer Schenkel 33 verläuft annähernd parallel zum äußeren Schenkel 32, wobei die Schenkel 32, 33 durch einen Stegabschnitt 34 verbunden sind. Der Stegabschnitt 34 erstreckt sich in einem relativ kleinen Winkel zur Erstrekkung des Scheibenabschnitts 30. Der innere Schenkel 33 endet vor der Unterseite des Scheibenabschnitts 30 und bildet mit dem äußeren Schenkel eine Ringkammer 35, die in Richtung Stegabschnitt 34 konisch nach außen verläuft. Im Ubergangsbereich zwischen Stegabschnitt 34 und äußerem Schenkel 32 ist eine schräge Ringfläche 36 vorgesehen. Auf der gegenüberliegenden Seite ist eine kleinere schräge Ringfläche 37 geformt. In die Innenseite des inneren Schenkels 33 ist eine Ringnut 38 (Labryrinth) geformt.

Die PTFE-Membran 23 ist aus virginalem PTFE durch Drehen aus dem Vollen geformt. Das Material weist daher seine ursprüngliche Elastizität auf.

Der Druckring 24 ist in Fig. 7 dargestellt. Er besitzt an der Innenseite eine ringförmige Nase 39, die nach oben hin eine ringförmige Schrägfläche 40 bildet und nach unten eine ringförmige Ausnehmung 41.

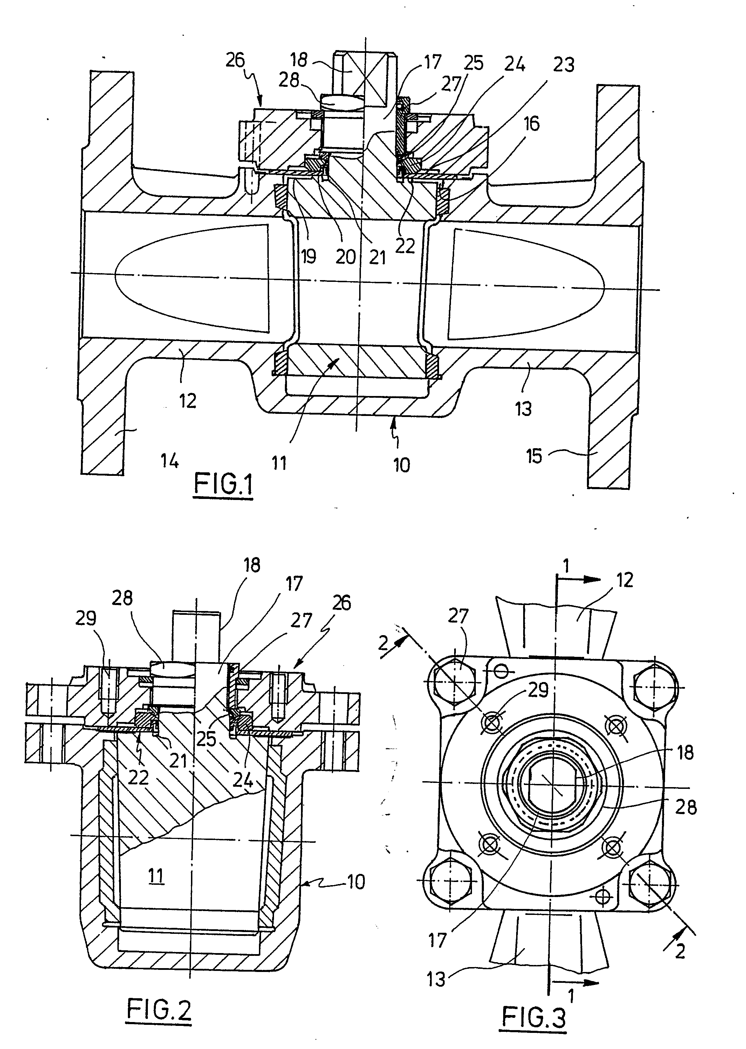

Wie aus den Figuren 1 und 2 ersichtlich, können die Metallmembran 23 und der Druckring 24 rastend auf das Hakenprofil 31 der PTFE-Membran 23 aufgesteckt werden. Zu erwähnen ist noch, daß die Ausnehmung 41 mit einem ähnlichen Hinterschnitt versehen ist wie das Hakenprofil 31 auf der Außenseite. Die erwähnten Teile können daher vormontiert und als Einheit auf den Betätigungszapfen 17 aufgebracht werden. Dies kann z.B. mit Hilfe eines Montagedorns erfolgen, der eine konische Auflauffläche hat, damit die erwähnte Einheit vom Montagedorn auf den Betätigungszapfen 17 aufgeschoben werden kann. Bei diesem Vorgang wird der eine Dichtlippe bildende innere Schenkel 23 elastisch verformt und legt sich mit seiner Außenseite satt gegen die Außenseite des Betätigungszapfens 17 an. Ein Quetschen des Scheibenabschnitts 30 zwischen Druckring 30 und Ringfläche 20 führt zu einer Verdrängung des Materials auch in Richtung des Hakenprofils 31. Das Material kann sich frei in Richtung der Dichtlippe 33 ausdehnen und deren Dichtwir kung dabei noch verstärken.

Der Zwischenring 25 liegt mit seiner kugeligen Fläche auf der Schrägfläche 40 des Druckrings 24 auf, so daß unabhängig von der Position des Ringes 25 und der Druckhülse 27 und eines eventuellen Verkantens stets ein gleichmäßiger Druck über den Umfang auf den Druckring 24 aufgebracht wird. Örtliche höhere Flächenpressungen, die zu einer entsprechenden Verformung der Dichtmembran 23 führen, werden auf diese Weise vermieden. Ein Absacken des Hahnkükens 11 führt nicht zu einem Aufheben des Dichtungseingriffs, wie ohne weiteres aus den Figuren 1 und 2 hervorgeht. Dies liegt daran, daß die Dichtungsteile, Druckring, Metallmembran und PTFE-Membran als Einheit zusammenbleiben. Sie können dann anschließend mit Hilfe der Andrückhülse 27 verstellt werden. Diese Verstellung kann von der Seite mit einem geeigneten Werkzeug erfolgen. Ein Ausbau einer Antriebsvorrichtung ist daher nicht erforderlich.

**Ansprüche**

1. Dichtungsanordnung für den Betätigungszapfen eines Absperrhahns, mit einer ringförmigen, den Absperrzapfen umgebenden Membran aus PTFE, die auf einer oberen Schulterfläche des Hahnkükens aufliegt und am inneren Rand ein im Querschnitt hakenförmiges, zwei Schenkel aufweisendes Profil aufweist zur Bildung einer gegen den Betätigungszapfen anliegenden Dichtlippe durch den inneren Schenkel, wobei der Scheitel des Profils auf der dem Hahnküken abgewandten Seite liegt, einem Druckring, der gegen die Membran anliegt und am inneren Rand der äußeren Kontur des hakenförmigen Profils folgt, und einer Andrückvorrichtung für den Druckring, die von außerhalb des Hahngehäuses betätigbar ist, dadurch gekennzeichnet, daß die Membran (23) aus virginalem PTFE aus dem Vollen gedreht ist und das hakenförmige Profil (31) so geformt und angeordnet ist, daß sich die Dichtlippe (33) beim Aufbringen der Membran auf den Betätigungszapfen (17) elastisch in den freien Ringraum (35) zwischen den Schenkeln (32, 33) verformen kann unter satter Anlage der geraden Innenseite der Dichtlippe (33) am Betätigungszapfen (17).

2. Dichtungsanordnung nach Anspruch 1, dadurch gekennzeichnet, daß der äußere Schenkel (32) des hakenförmi gem Profils (31) mit der Ebene der Membran (30) einen spitzen Winkel bildet und eine ringförmige Metallmembran (23) - schnappend auf das hakenförmige Profil (31) aufsteckbar ist.

3. Dichtungsanordnung nach Anspruch 2, dadurch gekennzeichnet, daß der äußere Schenkel an der der Membran abgewandten Seite eine konische zur Membran abfallende Fläche (36) aufweist.

4. Dichtungsanordnung nach einem der Ansprüche 1 bis 3, dadurch gekennzeichnet, daß in die innere Seite des inneren Schenkels (33) eine Ringnut (38) geformt ist.

5. Dichtungsanordnung nach einem der Ansprüche 1 bis 4, dadurch gekennzeichnet, daß beide Schenkel (32, 33) des hakenförmigen Profils (31) im Querschnitt annähernd parallel verlaufen.

6. Dichtungsanordnung nach einem der Ansprüche 2 bis 5, gekennzeichnet durch ein Querschnittsprofil des Druckrings (24), das ebenfalls - schnappend auf das hakenförmige Profil (31) aufsteckbar ist.

7. Dichtungsanordnung nach einem der Ansprüche 1 bis 6, dadurch gekennzeichnet, daß unterhalb der Dichtlippe (33) an den Betätigungszapfen (17) angrenzend eine Ringnut (21) in der Schulterfläche des Hahnkükens (11) geformt ist.

8. Dichtungsanordnung nach einem der Ansprüche 1 bis 7, dadurch gekennzeichnet, daß der Druckring (24) auf der der Membran (22) abgewandten Seite eine konische Ringfläche (40) aufweist, die in Richtung Zapfen (17) geneigt ist, ein Zwischenring (25) mit seiner Kugelabschnittsfläche gegen die konische Ringfläche (40) anliegt und den Zapfen (17) mit radialem Abstand umgibt und eine den Betätigungszapfen (17) umgebende Andrückhülse (27) in ein Gehäuseteil (26) einschraubbar ist und gegen die der Kugelabschnittsfläche abgewandten Seite des Zwischenrings (25) anliegt.

0 263 922

FIG.1

FIG.2

FIG.3

FIG.4

FIG.5

FIG.6

FIG.7